# EUROPÄISCHE PATENTSCHRIFT

(11) **EP 2 985 354 B1**
(45) Veröffentlichungstag und Bekanntmachung des Hinweises auf die Patenterteilung: **19.10.2016**
(21) Anmeldenummer: 14192464.7
(22) Anmeldetag: 10.11.2014
(51) Int. Cl.: C22B 3/00, B01J 23/96

(54) **Verfahren zum Entfernen von Edelmetall aus edelmetallhaltigen Katalysatorformkörpern**
Method for removing noble metal from a catalyst support containing noble metals
Procédé d'extraction de métal précieux à partir de support de catalyseur contenant des métaux précieux

(43) Veröffentlichungstag der Anmeldung: 17.02.2016
(73) Patentinhaber: Heraeus Deutschland GmbH & Co. KG, 63450 Hanau (DE)
(72) Erfinder: Röhlich, Christoph, 63456 Hanau (DE); Thiel, Vasco, 63755 ALZENAU (DE); Fuchs Alameda, Stefanie, 63599 BIEBERGEMÜND-BIEBER (DE); Schapp, Jan, 63303 DREIEICH (DE); Voss, Steffen, 63694 Limeshain (DE)
(74) Vertreter: Heraeus IP

(56) Entgegenhaltungen:
- WO-A1-2011/140593
- JP-A- 2004 225 067
- US-A- 3 016 354
- BARAKAT M A ET AL: "Recovery and separation of palladium from spent catalyst", APPLIED CATALYSIS A: GENERAL, ELSEVIER SCIENCE, AMSTERDAM, NL, Bd. 301, Nr. 2, 24. Februar 2006 (2006-02-24), Seiten 182-186, XP028001512, ISSN: 0926-860X, DOI: 10.1016/J.APCATA.2005.11.028 [gefunden am 2006-02-24]

## Beschreibung

Die vorliegende Erfindung betrifft ein Verfahren zum Entfernen von Edelmetall aus edelmetallhaltigen Katalysatorformkörpern.

Bei einer Vielzahl von chemischen Prozessen werden heute Edelmetalle und edelmetallhaltige Spezies als Katalysatoren eingesetzt. Dabei gibt es prinzipiell zwei Möglichkeiten, wie das Edelmetall in dem Prozess vorliegen kann. Entweder liegt die katalytisch aktive Spezies in einer homogenen Mischung mit den Reaktanten vor oder die katalytisch aktive Spezies ist auf einem zumeist inerten Trägermaterial abgeschieden und liegt als heterogenes Gemisch mit den Reaktanten vor. In vielen Fällen sind heterogene Katalysatoren bevorzugt, da sie sich auf einfache Weise, z.B. durch Filtration, aus einer Reaktionsmischung entfernen lassen. Eine Vielzahl von großtechnischen chemischen Prozessen, wie z.B. das Reforming bei der Treibstoffherstellung, die Herstellung von Monomeren für die Polymerchemie oder die Herstellung von Ammoniak, verwenden heterogene Katalysatoren im Multitonnenmaßstab. Um heterogene Katalysatormaterialien besser handhaben zu können, werden die Edelmetalle auf zumeist inerten, makroskopischen Formkörpern aufgebracht, die z.B. aus Aluminiumoxid oder Siliziumoxid bestehen. Die Materialien, die für solche Formkörper verwendet werden, sind typischer Weise hochporös und ermöglichen dadurch eine gleichmäßige Verteilung des Edelmetalls auf einer großen Oberfläche. Auf Grund der guten Zugänglichkeit der fein verteilten Edelmetallzentren auf der Oberfläche wird eine hohe katalytische Aktivität gewährleistet. Als Formkörper kommen zum Beispiel Stränge, Zylinder, Pellets, Ringe, Multi-Loch-Ringe, Kugeln, Sattelkörper, Räder, Sessel, Schaumkörper oder Waben zum Einsatz, die unter anderem durch Extrusion oder Pressen hergestellt werden können.

Nach einer bestimmten Betriebsdauer lässt die Aktivität des edelmetallhaltigen Katalysators nach und er muss ersetzt werden. Auf Grund des hohen Edelmetallpreises ist eine Verwendung von edelmetallhaltigen Katalysatoren häufig nur wirtschaftlich, wenn das verwendete Edelmetall zurückgewonnen werden kann. Typischer Weise werden verbrauchte heterogene Edelmetallkatalysatoren auf Basis poröser Formkörper als Träger zur Aufarbeitung gemahlen und das Edelmetall anschließend heraus gelöst. Alternativ wird der edelmetallhaltige Katalysatorformkörper schmelzmetallurgisch in Edelmetall und Trägermaterial getrennt. In beiden Fällen werden die Formkörper zerstört.

Da jedoch auch die als Träger dienenden Formkörper aufwändig in der Herstellung sein können, ist es wünschenswert, nicht nur das Edelmetall sondern auch die Formkörper mehrfach zu verwenden. Dies macht Verfahren notwendig, die das Edelmetall effizient und zerstörungsfrei von verbrauchten edelmetallhaltigen Katalysatorformkörpern entfernen können. Die US 3,016,354 lehrt ein Verfahren zur Rückgewinnung von Platin aus platinhaltigen Katalysatorformkörpern, bei welchem Chlorgas durch eine Mischung von Salzsäure und platinhaltigen Katalysatorformkörpern geleitet wird.

Die Einleitung von gasförmigem Chlor und anderen gasförmigen Oxidationsmitteln weist etliche Nachteile auf.

Zum einen erfordert der Einsatz von Chlorgas einen erheblichen apparativen Aufwand, sowohl bei der Bereitstellung als auch bei der Entsorgung des hochreaktiven Gases.

Zum anderen ist das Einleiten eines Oxidationsmittels im gasförmigen Zustand, beispielsweise Chlor nicht effizient, da signifikante Mengen des verwendeten Gases durch die Lösung strömen, ohne mit den edelmetallhaltigen Katalysatorformkörpern hinreichend in Kontakt zu kommen. Diese Tatsache macht beispielsweise eine technisch aufwändige Rückgewinnungsanlage für Chlorgas oder eine entsprechende Abluftwäsche notwendig oder sie erfordert die Verwendung von Chlorgas in hohem Überschuss. Sowohl die Chlorrückgewinnung, die Abluftwäsche als auch der übermäßige Gebrauch von Chlorgas machen das Verfahren wenig wirtschaftlich.

Die Aufgabe der vorliegenden Erfindung bestand darin, ein effizientes Verfahren zum nahezu vollständigen Entfernen von Edelmetall aus edelmetallhaltigen Katalysatorformkörpern (= der heterogene Katalysator) zu entwickeln, wobei die Formkörper nicht zerstört werden und zur Herstellung von heterogenen Katalysatoren wiederverwendet werden können. Ferner war es Aufgabe der vorliegenden Erfindung, ein Verfahren bereitzustellen, welches eingesetzte Oxidationsmittel besser ausnutzt als der Stand der Technik.

Die Aufgabe wird durch das Verfahren der vorliegenden Erfindung gemäß Anspruch 1 gelöst. Dies geschieht durch ein Verfahren zum Entfernen von Edelmetall aus edelmetallhaltigen Katalysatorformkörpern umfassend Formkörper und Edelmetall, wobei das zu entfernende Edelmetall mindestens ein Edelmetall ausgewählt aus der Gruppe bestehend aus Au, Ag, Pd, Pt, Ir, Rh, Ru, Os und Re umfasst, aufweisend die Schritte:
(a) Herstellen einer Mischung von edelmetallhaltigen Katalysatorformkörpern in mindestens einer mindestens 1 N Mineralsäure,
(b) Einleiten von inertem oder oxidierendem Gas in die Mischung enthaltend edelmetallhaltige Katalysatorformkörper und Mineralsäure,
(c) Einbringen mindestens eines Oxidationsmittels in fester oder flüssiger Form in die Mischung enthaltend edelmetallhaltige Katalysatorformkörper und Mineralsäure und
(d) Abtrennen der Formkörper von der Flüssigkeit.

Dabei erfolgt Schritt (a) vor den Schritten (b) und (c). In einer bevorzugten Ausführungsform erfolgen die Schritte (b) und (c) parallel, d.h. gleichzeitig oder einander überlappend. Alternativ kann auch zunächst Schritt (b) und dann Schritt (c) durchgeführt werden oder Schritt (c) wird vor Schritt (b) durchgeführt.

Das erfindungsgemäße Verfahren kann auch weitere Verfahrensschritte aufweisen, die vor nach oder zwischen den Schritten (a), (b), (c) und (d) ablaufen.

Unter dem Begriff *Formkörpersind* im Sinne dieser Erfindung die praktisch edelmetallfreien anorganischen Träger zu verstehen, auf denen katalytisch wirksames Edelmetall aufgebracht werden kann.

Unter dem Begriff *edelmetallhaltige Katalysatorformkörpersind* im Sinne dieser Erfindung Formkörper zu verstehen, die katalytisch aktives Edelmetall aufweisen.

Das Verfahren der vorliegenden Erfindung hat zur Aufgabe, Edelmetall aus edelmetallhaltigen Katalysatorformkörpern so vollständig und schonend zu entfernen, dass die so vom Edelmetall befreiten Formkörper dazu geeignet sind, daraus wieder als heterogene Katalysatoren verwendbare edelmetallhaltige Katalysatorformkörper herzustellen. Bei den edelmetallhaltigen Katalysatorformkörpern, von denen Edelmetall entfernt werden soll, handelt es sich insbesondere um verbrauchte heterogene Katalysatoren.

Das erfindungsgemäße Verfahren lässt sich auf edelmetallhaltige Katalysatorformkörper anwenden, wobei unter Edelmetallen die Elemente Au, Ag, Pd, Pt, Ir, Rh, Ru, Os und Re zu verstehen sind. Die Edelmetalle können entweder einzeln oder in beliebiger Kombination auf bzw. in den edelmetallhaltigen Katalysatorformkörpern vorliegen. Dabei können das oder die Edelmetalle teilweise oder vollständig als Elemente in der Oxidationsstufe (0) vorliegen. Typischer Weise enthalten die edelmetallhaltigen Katalysatorformkörper 0,1 - 50 Gew.-% Edelmetall bezogen auf ihr Gesamtgewicht.

Damit ein Trägermaterial für Formkörper in edelmetallhaltigen Katalysatorformkörpern geeignet ist, muss es chemisch möglichst inert sein gegenüber vielen verschiedenen Reaktionsbedingungen. Insbesondere müssen die Formkörper inert sein gegenüber stark sauren und oxidierenden Reaktionsbedingungen. Neben der chemischen Stabilität ist es weiterhin erforderlich, dass die Materialien auch hohen mechanischen Belastungen Stand halten. Da edelmetallhaltige Katalysatorformkörper häufig als Schüttgut-Katalysatoren verwendet werden, ist vor allem eine hohe Beständigkeit gegen Abrieb erforderlich. Es hat sich herausgestellt, dass anorganische Keramikmaterialien besonders geeignet für den Einsatz als Materialien für Formkörper sind. Hierbei können sowohl reine Oxidkeramiken, wie etwa Aluminiumoxid, Magnesiumoxid, Zirkoniumoxid, Titandioxid, Siliziumdioxid zum Einsatz kommen als auch Mischoxidkeramiken, wie z.B. Aluminiumtitanat, Dispersionskeramik (Al₂O₃/ZrO₂), Bleizirkonattitanat und Bariumtitanat. Weiterhin können die Trägermaterialien, aus denen die Formkörper bestehen, mit weiteren Elementen, wie z.B. Seltenerdmetallen dotiert sein, um die chemische Stabilität weiter zu erhöhen. Bevorzugt bestehen die Formkörper zu 75 - 100 Gew.-% aus gegenüber Säuren inerten (gegenüber Säuren im Wesentlichen oder vollständig inerten) Oxiden mindestens eines Elements ausgewählt aus der Gruppe bestehend aus Al, Ti, Mg, Zr, Sn, Fe und Si.

Neben den oxidischen Materialien können auch Nicht-Oxidkeramiken, wie zum Beispiel Siliciumcarbid, Siliciumnitrid, Aluminiumnitrid, Borcarbid und Bornitrid als Trägermaterial für Formkörper zum Einsatz kommen.

Um das katalytisch aktive Edelmetall möglichst gut aufnehmen zu können, werden in einer bevorzugten Ausführungsform poröse Materialien mit einer großen Oberfläche verwendet, auf denen katalytisch aktives Edelmetall möglichst fein verteilt vorliegt. Als besonders geeignet hat sich poröses α-Al₂O₃ herausgestellt.

Damit die heterogenen Katalysatoren besser handhabbar sind, werden sie typischer Weise zu unterschiedlichen Formkörpern wie z.B. Strängen, Zylindern, Pellets, Ringen, Multi-Loch-Ringen, Kugeln, Sattelkörpern, Rädern, Sesseln, Schaumkörpern oder Waben verarbeitet. Zur Herstellung kommen beispielsweise Extrusion und Pressen zum Einsatz. Die so hergestellten Formkörper können an der dicksten Stelle Durchmesser von beispielsweise 100 µm bis zu 50 Zentimetern aufweisen.

Um Edelmetall von verbrauchten edelmetallhaltigen Katalysatorformkörpern zurückzugewinnen, ist es notwendig, das Edelmetall von den Formkörpern nahezu vollständig abzulösen. Unter vollständigem Lösen ist zu verstehen, dass die im erfindungsgemäßen Verfahren von Edelmetall befreiten Formkörper ≤ 100 ppm Edelmetall bezogen auf das Gesamtgewicht aufweisen.

Erfindungsgemäß kommt in dem Verfahren Mineralsäure zum Einsatz, wie beispielsweise Chlorwasserstoffsäure, Bromwasserstoffsäure, lodwasserstoffsäure, Salpetersäure, Schwefelsäure und/oder Phosphorsäure. Die in Verfahrensschritt (a) eingesetzte Mineralsäure oder -säuren sind entweder konzentriert oder es handelt sich um verdünnte Lösungen mit einer Konzentration von ≥ 1 mol Säure (H₃O⁺) pro Liter.

Gemäß der vorliegenden Erfindung wird in Verfahrensschritt (a) eine Mischung von edelmetallhaltigen Katalysatorformkörpern in mindestens 1 N Mineralsäure hergestellt. Vorzugsweise sind die edelmetallhaltigen Katalysatorformkörper in der Mischung vollständig von Flüssigkeit bzw. Mineralsäure bedeckt.

Gemäß Verfahrensschritt b) der vorliegenden Erfindung wird in eine so hergestellte Mischung Gas eingeleitet, um für eine Durchmischung, beispielsweise eine kontinuierliche Durchmischung zu sorgen. Dazu wird bevorzugt Gas in der unteren Hälfte der Mischung aus edelmetallhaltigen Katalysatorformkörpern und Mineralsäure eingeleitet. Besonders bevorzugt ist es, wenn Gas am Boden des Reaktionsbehälters eingeleitet wird. Vorzugsweise wird das Gas so eingeleitet, dass die in der Flüssigkeit aufsteigenden Gasblasen die Mischung durchperlen und für eine hinreichende Durchmischung sorgen. Der Gasfluss ist bevorzugt so einzustellen, dass die Gasblasen die edelmetallhaltigen Katalysatorformkörper umströmen, sodass vorwiegend die Flüssigkeit durchmischt wird und die Katalysatorformkörper nicht oder nur wenig bewegt werden. Der Abrieb an den Formkörpern kann dabei vermindert werden, d.h. die Formkörper können mechanisch geschont und infolgedessen häufiger wiederverwendet werden. Der Gasfluss kann vorzugsweise so eingestellt werden, dass die Mischung beim Durchmischen nicht spritzt. Durch gezieltes Einstellen des Gasflusses kann die Mischung so bewegt werden, dass für eine gleichmäßig ablaufende Reaktion im gesamten Reaktionsbehälter gesorgt wird.

Als Gase zum Durchmischen (Mischgas) kommen erfindungsgemäß Gase in Frage, die inert sind oder oxidierend wirken, beispielsweise gegenüber Edelmetallen inert sind oder oxidierend wirken. Als oxidierend wirkende Mischgase können z.B. Luft oder andere Gasgemische aus Sauerstoff und inerten Gasen zum Einsatz kommen. Chlorgas oder Chlorgas enthaltende Gasgemische werden erfindungsgemäß bevorzugt nicht verwendet. Durch die Verwendung von oxidierend wirkenden Mischgasen kann die Ausbeute des abzulösenden Edelmetalls erhöht werden. Erfindungsgemäß können als Mischgase auch inerte Gase wie z.B. Stickstoff, Argon oder Kohlendioxid verwendet werden. Durch Verwendung von inertem oder oxidierend wirkendem Gas zum Durchmischen kann die Reaktivität der Mischung gesteuert werden. Wird inertes Mischgas verwendet, kann die Reaktivität der Mischung herabgesetzt werden, während die Verwendung eines oxidierenden Gases die Reaktivität der Mischung erhöhen kann.
In Schritt (c) des erfindungsgemäßen Verfahrens wird mindestens ein Oxidationsmittel in die edelmetallhaltige Katalysatorformkörper und Mineralsäure enthaltende Mischung eingebracht. Erfindungsgemäß wird das mindestens eine Oxidationsmittel in fester oder flüssiger Form in die Mischung eingebracht. Das mindestens eine Oxidationsmittel kann z.B. mit einer Lanze oder einem Schlauch in die Mischung eingebracht werden. Es kann bevorzugt sein, dass das mindestens eine Oxidationsmittel, insbesondere ein flüssiges Oxidationsmittel, in der unteren Hälfte und besonders bevorzugt am Boden des Reaktionsbehälters in die Mischung eingebracht wird.

In einer speziellen Ausführungsform wird das mindestens eine Oxidationsmittel an praktisch der gleichen Stelle in die Mischung eingebracht wie das Mischgas.

Bevorzugt ist das mindestens eine Oxidationsmittel in fester oder flüssiger Form in der verwendeten Mineralsäure löslich.

Typische Oxidationsmittel zur Anwendung im erfindungsgemäßen Verfahren sind ausgewählt aus der Gruppe bestehend aus Chloraten, Nitraten, Bromaten, Iodaten, Chloriten, Bromiten, loditen, Hypochloriten, Hypobromiten, Hypoioditen, Perchloraten, Brom, Iod, Peroxiden, Permanganaten und Chromaten. Erfindungsgemäß können auch Kombinationen mehrerer verschiedener Oxidationsmittel in fester oder flüssiger Form in die Mischung eingebracht werden. Wird das Oxidationsmittel als Feststoff zugegeben, kann dies zum Beispiel als Salz von Alkali - oder Erdalkalimetallen vorliegen. Insbesondere kann Natrium- oder Kaliumchlorat verwendet werden.

Um die Handhabung und Dosierung zu erleichtern, ist es möglich, das mindestens eine Oxidationsmittel als Lösung zuzugeben. Bevorzugt bilden das mindestens eine zugegebene Oxidationsmittel und die Mineralsäure eine homogene Lösung. In manchen Fällen kann auch die Mineralsäure der hergestellten Mischung eine oxidierende Wirkung haben. Als "mindestens ein Oxidationsmittel" in Schritt (c) des erfindungsgemäßen Verfahrens sind solche Oxidationsmittel zu verstehen, die von der oder den im erfindungsgemäßen Verfahren verwendeten Mineralsäuren verschieden sind.

Die Einwirkdauer des mindestens einen Oxidationsmittels ist nicht weiter beschränkt. In einer bevorzugten Ausführungsform kann die Einwirkdauer 5 - 240 Minuten, besonders bevorzugt 10 - 120 Minuten und insbesondere 15 - 60 Minuten betragen.

Das erfindungsgemäße Verfahren kann bei Raumtemperatur, z.B. 15 - 25°C durchgeführt werden. Es kann jedoch auch bevorzugt sein das Verfahren bei erhöhten Temperaturen bis hin zur Siedetemperatur durchzuführen. Insbesondere wird das Verfahren bei Temperaturen von 30 - 90°C durchgeführt.

Das Einbringen mindestens eines Oxidationsmittels in fester oder flüssiger Form hat mehrere Vorteile gegenüber gasförmigen Oxidationsmitteln. Zum einen lässt sich die benötigte Menge an Oxidationsmittel sehr genau dosieren, da sichergestellt werden kann, dass sämtliches eingesetzte Oxidationsmittel auch in der Mischung vorliegt. Zum anderen kann die feste oder flüssige Zugabe mindestens eines Oxidationsmittels den optimalen Kontakt zwischen abzulösendem Edelmetall und Oxidationsmittel sicherstellen. Im Gegensatz dazu kommt bei gasförmigen Oxidationsmitteln wie Chlorgas wie im Falle des aus US 3,016,354 bekannten Verfahrens nicht sämtliches Oxidationsmittel bei dem zu oxidierenden Edelmetall an, da es sich nicht vollständig in der Mischung löst und nur eingeschränkt Kontakt zum Edelmetall hat. Einer der Vorteile des erfindungsgemäßen Verfahrens ergibt sich aus dem unabhängig voneinander ablaufenden Einleiten von Mischgas und mindestens einem Oxidationsmittel. Dies erlaubt eine optimale Dosierung des mindestens einen Oxidationsmittels und gewährleistet gleichzeitig eine optimale Durchmischung, so dass Edelmetall vollständig oder nahezu vollständig von den vom Edelmetall zu befreienden Formkörpern abgelöst werden kann, während die Formkörper wenig mechanisch beansprucht werden. Durch die Verbesserung des Kontakts zwischen Edelmetall und dem mindestens einen flüssigen oder festen Oxidationsmittel ist es möglich, innerhalb einer kürzeren Zeit Edelmetall von den edelmetallhaltigen Katalysatorformkörpern zu lösen als mit gasförmigem Oxidationsmittel. Dadurch werden die Formkörper zeitlich kürzer mechanisch und chemisch beansprucht.

Die geringe mechanische Beanspruchung der Formkörper während des erfindungsgemäßen Verfahrens drückt sich unter anderem in einer nur geringen Menge produzierten Abriebs aus. Je weniger Abrieb, auch Feine genannt, in dem Verfahren anfällt, umso schonender ist das Verfahren für die Formkörper.

Nachdem die Einleitung des mindestens einen flüssigen oder festen Oxidationsmittels abgeschlossen ist und das Edelmetall vom edelmetallhaltigen Katalysatorformkörper abgelöst wurde, wird der Feststoff (Formkörper) im Zuge von Verfahrensschritt (d) von der Lösung, zum Beispiel durch Dekantieren, Filtration oder Zentrifugieren, abgetrennt.

In einem Verfahrensschritt (e) kann der Feststoff mindestens einmal gewaschen werden, beispielsweise mit Mineralsäure oder bevorzugt mit Wasser. Dabei kann Edelmetall möglichst vollständig von dem Feststoff entfernt werden. Die ursprüngliche Reaktionslösung, die den Hauptteil des herausgelösten Edelmetalls enthält, kann dann mit der Waschflüssigkeit vereinigt werden. Aus den vereinigten Lösungen kann das Edelmetall nach bekannten technischen Verfahren zurückgewonnen werden.

Neben Edelmetall können durch das Verfahren der vorliegenden Erfindung auch Buntmetalle und/oder Nichteisenmetalle, insbesondere Cadmium (Cd), Cobalt (Co), Kupfer (Cu), Nickel (Ni), Blei (Pb), Zinn (Sn), Zink (Zn), Vanadium (V), Mangan (Mn), Chrom (Cr) und Eisen (Fe) von den edelmetallhaltigen Katalysatorformkörpern entfernt werden.

Durch die Verwendung des erfindungsgemäßen Verfahrens können edelmetallfreie Formkörper gewonnen werden, die wieder zu neuen Katalysatoren verarbeitet werden können. Bevorzugt weisen solche edelmetallfreien Formkörper nach der Durchführung des Verfahrens ≤ 100 ppm Edelmetall bezogen auf ihr Gesamtgewicht auf.

Durch die Verwendung des erfindungsgemäßen Verfahrens kann ferner eine edelmetallhaltige Lösung gewonnen werden, die neben dem von den Katalysatorformkörpern entfernten Edelmetall gegebenenfalls ein oder mehrere Buntmetalle und/oder Nichteisenmetalle enthalten kann.

Das erfindungsgemäße Verfahren erlaubt es, mehr als 99 Gew.-% des ursprünglich auf den edelmetallhaltigen Katalysatorformkörpern vorhandenen Edelmetalls zu lösen.

### Beispiele

Beispiel 1 zeigt eine bevorzugte Ausführungsform des erfindungsgemäßen Verfahrens im Pilotmaßstab.

### Beispiel 1:

In einem Kessel wurden 592 kg edelmetallhaltige Katalysatorformkörper (0,510 Gew.-% Pd auf Kugeln aus α-Al₂O₃, 4 mm Durchmesser; entsprechend 3019 g Pd) mit 213 L Wasser und 321 L 10M HCl vermischt. Es wurde Druckluft eingeleitet, so dass die Schüttung hinreichend durchmischt wurde, die Oberfläche der Lösung aber nicht spritzte. Es wurde auf 60°C geheizt. Es wurden 10 L 0,45M NaClO₃-Lösung am Boden in den Kessel geleitet und dann 15 min gewartet. Dieser Vorgang wurde zweimal wiederholt. Die Mischung wurde noch für 2 h bei 60°C gehalten. Dann wurde die Reaktionslösung aus dem Kessel gepumpt.

Der feste Rückstand wurde nun 6x mit Wasser ausgewaschen. Dazu wurde Wasser bis zur Bedeckung des Materials zugegeben, für 30 min mit Druckluft vermengt, und die Lösung anschließend abgepumpt.

Die Reaktionslösung und die Waschlösungen wurden in einem Kessel vereinigt. Die vereinten Lösungen wurden über Nacht stehen gelassen, wobei sich die Feinanteile absetzten. Die Lösung wurde dekantiert, der Rückstand durch einen Blaubandfilter filtriert und ausgewaschen. Die gesammelten Filterrückstände (Feinanteile) wurden getrocknet. Es wurden 380 g Feine gewonnen (0,064% des Ausgangsmaterials).

Die Formkörper wurden aus dem Kessel entfernt und bis zur Gewichtskonstanz getrocknet. Eine Palladium-Analyse mittels ICP-OES ergab einen Restgehalt von 60 ppm Pd bezogen auf das Gesamtgewicht der Formkörper, entsprechend einer 99-prozentigen Ausbeute.
Die Beispiele 2 - 4 im Labormaßstab demonstrieren den unterschiedlichen Abrieb beim Einsatz von Natriumchlorat-Lösung als Oxidationsmittel im Vergleich zur Chlorgaseinleitung.

### Beispiel 2:

200 g eines edelmetallhaltigen Katalysatorformkörpers (0,510% Pd auf Kugeln aus α-AI₂0₃, 4 mm Durchmesser; entsprechend 1020 mg Pd) wurden in einen 500 mL Dreihalskolben eingewogen, mit 200 ml 5M HCl bedeckt und auf 60°C aufgeheizt. Anschließend wurde mit einem Einleitrohr Druckluft eingeblasen (40 L/h), und mit einer Pipette 2 mL 4,5M NaClO₃-Lösung unten in das Material eingespritzt und 5 Minuten wirken gelassen, anschließend nochmal 1,5 mL zugesetzt und 10 Minuten reagieren gelassen. Die Formkörper wurden durch Sieben von der Reaktionslösung getrennt. Die Formkörper wurden 6x mit je 120 mL Wasser versetzt, je 1 - 2 Stunden stehen gelassen und anschließend wieder über das Sieb gegeben. Die vereinten Lösungen mitsamt darin befindlichen Feinanteilen wurden über einen Blaubandfilter filtriert, das Filtrat gemischt und auf enthaltenes Aluminium analysiert. Die Formkörper und die gewonnen Feinanteile wurden jeweils getrocknet und gewogen.

### Beispiel 3:

Wie Beispiel 2; der einzige Unterschied bestand darin, dass statt einer Zugabe von Natriumchloratlösung nun zusätzlich zur Druckluft Chlor (3 L/h) für 15 Minuten in die Mischung eingeleitet wurde.

### Beispiel 4:

Wie Beispiel 2; der einzige Unterschied bestand darin, dass statt einer Zugabe von Natriumchloratlösung nun zusätzlich zur Druckluft Chlor (3 L/h) für 60 Minuten in die Mischung eingeleitet wurde.

Die folgende Tabelle gibt die Ergebnisse bzgl. des Pd-Restgehaltes sowie der Beanspruchung der Formkörper (Abrieb, sowie gelöstes Al) der Beispiele 2 - 4 vergleichend wieder. Der Vergleich zwischen den Beispielen 2 und 3 zeigt, dass eine Behandlung mit Chlorat im Vergleich zur äquivalenten Menge Chlorgas eine bessere Mobilisierung von Palladium im gleichen Zeitraum ergibt. Der Vergleich zwischen den Beispielen 2 und 4 zeigt, dass für eine höhere Mobilisierung von Palladium eine längere Behandlung mit Chlorgas notwendig wäre. Der Vergleich zwischen den Beispielen 3 und 4 zeigt, dass die Formkörper bei einer längeren Behandlungszeit stärker beansprucht werden. Bei längerer Behandlung wird mehr Aluminium vom Formkörper gelöst und mehr Abrieb (Feine) erzeugt.

| Beispiel | Feine im Filter [g] | In Lösung gegangenes Aluminium [mg] | Restgehalt Pd in den Formkörpern [%, bezogen auf ursprünglichen Pd-Gehalt] |
|---|---|---|---|
| 2 | 0,90 | 50 | 2,94 |
| 3 | 1,04 | 60 | 3,92 |
| 4 | 1,09 | 70 | 1,96 |

## Patentansprüche

1. Verfahren zum Entfernen von Edelmetall aus edelmetallhaltigen Katalysatorformkörpern umfassend Formkörper und Edelmetall, wobei das zu entfernende Edelmetall mindestens ein Edelmetall ausgewählt aus der Gruppe bestehend aus Au, Ag, Pd, Pt, Ir, Rh, Ru, Os und Re umfasst, aufweisend die Schritte:
(a) Herstellen einer Mischung von edelmetallhaltigen Katalysatorformkörpern in mindestens einer mindestens 1 N Mineralsäure,
(b) Einleiten von inertem oder oxidierendem Gas in die Mischung enthaltend edelmetallhaltige Katalysatorformkörper und Mineralsäure,
(c) Einbringen mindestens eines Oxidationsmittels in fester oder flüssiger Form in die Mischung enthaltend edelmetallhaltige Katalysatorformkörper und Mineralsäure und
(d) Abtrennen der Formkörper von der Flüssigkeit.

2. Verfahren nach Anspruch 1,
**gekennzeichnet durch** einen weiteren Schritt (e), in dem der Feststoff gewaschen wird.

3. Verfahren gemäß Anspruch 1 oder 2,
**dadurch gekennzeichnet,**
**dass** die Mineralsäure ausgewählt ist aus der Gruppe bestehend aus Chlorwasserstoffsäure, Bromwasserstoffsäure, Iodwasserstoffsäure, Salpetersäure, Schwefelsäure und Phosphorsäure.

4. Verfahren gemäß einem der Ansprüche 1 - 3,
**dadurch gekennzeichnet,**
**dass** das mindestens eine Oxidationsmittel ausgewählt ist aus der Gruppe, bestehend aus Chloraten, Nitraten, Bromaten, Iodaten, Chloriten, Bromiten, loditen, Hypochloriten, Hypobromiten, Hypoioditen, Perchloraten, Brom, Iod, Peroxiden, Permanganaten und Chromaten.

5. Verfahren gemäß einem der Ansprüche 1 - 4,
**dadurch gekennzeichnet,**
**dass** die edelmetallhaltigen Katalysatorformkörper in der Mischung vollständig von Flüssigkeit bedeckt sind.

6. Verfahren gemäß einem der Ansprüche 1 - 5,
**dadurch gekennzeichnet,**
**dass** die edelmetallhaltigen Katalysatorformkörper Edelmetall in Oxidationsstufe (0) aufweisen.

7. Verfahren gemäß einem der Ansprüche 1 - 6,
**dadurch gekennzeichnet,**
**dass** die Formkörper zu 75 - 100 Gew.-% aus gegenüber Säuren inerten Oxiden mindestens eines Elements ausgewählt aus der Gruppe bestehend aus Al, Ti, Mg, Zr, Sn, Fe und Si, bestehen.

8. Verfahren gemäß einem der Ansprüche 1 - 7,
**dadurch gekennzeichnet,**
**dass** die in Schritt (a) eingesetzten edelmetallhaltigen Katalysatorformkörper Edelmetall in einer Menge von 0,1 Gew.-% bis 50 Gew.-% aufweisen.

9. Verfahren gemäß einem der Ansprüche 1 - 8,
**dadurch gekennzeichnet,**
**dass** die Einwirkzeit des mindestens einen Oxidationsmittels in Schritt (c) 5 - 240 min beträgt.

10. Verfahren gemäß einem der Ansprüche 1 - 9,
**dadurch gekennzeichnet,**
**dass** die Verfahrenstemperatur während der Schritte (b) und (c) im Bereich von 15°C bis zur Siedetemperatur liegt.

11. Verfahren gemäß Anspruch 10,
**dadurch gekennzeichnet,**
**dass** die Verfahrenstemperatur während der Schritte (b) und (c) im Bereich von 30 bis 90 °C liegt.

12. Verfahren gemäß einem der Ansprüche 1 - 11,
**dadurch gekennzeichnet,**
**dass** das mindestens eine Oxidationsmittel in der unteren Hälfte des Reaktionsbehälters in die Mischung eingebracht wird.

13. Verwendung eines Verfahrens gemäß einem der Ansprüche 1 - 12 zur Gewinnung von edelmetallfreien Formkörpern.

14. Verwendung eines Verfahrens gemäß einem der Ansprüche 1 - 12 zur Gewinnung einer Lösung enthaltend mindestens ein Edelmetall ausgewählt aus der Gruppe bestehend aus Au, Ag, Pd, Pt, Ir, Rh, Ru, Os und Re.

15. Verwendung gemäß Anspruch 14, wobei die Lösung ferner mindestens ein ebenfalls aus den edelmetallhaltigen Katalysatorformkörpern entferntes Metall ausgewählt aus der Gruppe bestehend aus Buntmetallen und Nichteisenmetallen enthält.

## Claims

1. Process for removing precious metal from precious metal-containing catalyst form bodies comprising form bodies and precious metal, whereby the precious metal to be removed is at least one precious metal selected from the group consisting of Au, Ag, Pd, Pt, Ir, Rh, Ru, Os, and Re, comprising the steps of:
(a) producing a mixture of precious metal-containing catalyst form bodies in at least one mineral acid that is at least 1 N;
(b) supplying inert or oxidising gas into the mixture containing precious metal-containing catalyst form bodies and mineral acid;
(c) introducing at least one oxidation agent, in solid or liquid form, into the mixture containing precious metal-containing catalyst form bodies and mineral acid; and
(d) separating the form bodies from the liquid.

2. Process according to claim 1, **characterised by** an additional step (e), in which the solid is being washed.

3. Process according to claim 1 or 2, **characterised in that** the mineral acid is selected from the group consisting of hydrochloric acid, hydrobromic acid, hydriodic acid, nitric acid, sulfuric acid, and phosphoric acid.

4. Process according to any one of the claims 1 - 3, **characterised in that** the at least one oxidation agent is selected from the group consisting of chlorates, nitrates, bromates, iodates, chlorites, bromites, iodites, hypochlorites, hypobromites, hypoiodites, perchlorates, bromine, iodine, peroxides, permanganates, and chromates.

5. Process according to any one of the claims 1 - 4, **characterised in that** the precious metal-containing catalyst form bodies in the mixture are fully covered by liquid and/or mineral acid.

6. Process according to any one of the claims 1 - 5, **characterised in that** the precious metal-containing catalyst form bodies comprise precious metal in oxidation stage (0).

7. Process according to any one of the claims 1 - 6, **characterised in that** 75 - 100 % by weight of the form bodies consist of oxides of at least one element selected from the group consisting of Al, Ti, Mg, Zr, Sn, Fe, and Si that are inert to acids.

8. Process according to any one of the claims 1 - 7, **characterised in that** the precious metal-containing catalyst form bodies used in step (a) contain precious metal in an amount of 0.1 % by weight to 50 % by weight.

9. Process according to any one of the claims 1 - 8, **characterised in that** the exposure time of the at least one oxidation agent in step (c) is 5 - 240 min.

10. Process according to any one of the claims 1 - 9, **characterised in that** the process temperature during steps (b) and (c) is in the range of 15°C of the boiling temperature.

11. Process according to claim 10, **characterised in that** the process temperature during steps (b) and (c) is in the range of 30 to 90 °C.

12. Process according to any one of the claims 1 - 11, **characterised in that** the at least one oxidation agent is supplied into the mixture through the lower half of the reaction container.

13. Use of a process according to any one of the claims 1 - 12 for recovering precious metal-free form bodies.

14. Use of a process according to any one of the claims 1 - 12 for recovering a solution containing at least one precious metal selected from the group consisting of Au, Ag, Pd, Pt, Ir, Rh, Ru, Os, and Re.

15. Use according to claim 14, whereby the solution further contains at least one metal selected from the group consisting of non-ferrous metals that has also been removed from the precious metal-containing catalyst form bodies.

## Revendications

1. Procédé d'élimination de métal noble de corps de moule de catalyseur contenant un métal noble comprenant des corps de moule et un métal noble, dans lequel le métal noble à éliminer comprend au moins un métal noble sélectionné parmi le groupe constitué de Au, Ag, Pd, Pt, Ir, Rh, Ru, Os et Re, présentant les étapes :
(a) réalisation d'un mélange de corps de moule de catalyseur contenant un métal noble dans au moins un acide minéral au moins 1 N,
(b) introduction de gaz inerte ou oxydant dans le mélange contenant des corps de moule de catalyseur contenant un métal noble et l'acide minéral,
(c) apport d'au moins d'un oxydant sous forme solide ou liquide dans le mélange contenant des corps de moule de catalyseur contenant un métal noble et l'acide minéral, et
(d) séparation des corps de moule du liquide.

2. Procédé selon la revendication 1, **caractérisé par** une autre étape (e) dans laquelle le solide est lavé.

3. Procédé selon la revendication 1 ou 2, **caractérisé en ce que** l'acide minéral est sélectionné parmi le groupe constitué de l'acide chlorhydrique, l'acide bromhydrique, l'acide iodhydrique, l'acide nitrique, l'acide sulfurique et l'acide phosphorique.

4. Procédé selon une des revendications 1 à 3, **caractérisé en ce que** l'au moins un oxydant est sélectionné parmi le groupe constitué de chlorates, nitrates, bromates, iodates, chlorites, bromites, iodites, hypochlorites, hypobromites, hypoiodites, perchlorates, brome, iode, peroxydes, permanganates et chromates.

5. Procédé selon une des revendications 1 à 4, **caractérisé en ce que** les corps de moule de catalyseur contenant un métal noble dans le mélange sont entièrement recouverts de liquide.

6. Procédé selon une des revendications 1 à 5, **caractérisé en ce que** les corps de moule de catalyseur contenant un métal noble présentent un métal noble au degré d'oxydation (0).

7. Procédé selon une des revendications 1 à 6, **caractérisé en ce que** les corps de moule se composent à 75 à 100 % en poids d'oxydes inertes par rapport à des acides d'au moins un élément sélectionné parmi le groupe constitué de Al, Ti, Mg, Zr, Sn, Fe et Si.

8. Procédé selon une des revendications 1 à 7, **caractérisé en ce que** les corps de moule de catalyseur contenant un métal noble utilisés à l'étape (a) présentent un métal noble en une quantité de 0,1 % en poids à 50 % en poids.

9. Procédé selon une des revendications 1 à 8, **caractérisé en ce que** le temps de réaction de l'au moins un oxydant à l'étape (c) se monte à 5 à 240 min.

10. Procédé selon une des revendications 1 à 9, **caractérisé en ce que** la température de procédé pendant les étapes (b) et (c) se situe dans la région de 15°C jusqu'à la température d'ébullition.

11. Procédé selon la revendication 10, **caractérisé en ce que** la température de procédé pendant les étapes (b) et (c) se situe dans la région de 30 à 90°C.

12. Procédé selon une des revendications 1 à 11, **caractérisé en ce que** l'au moins un oxydant est apporté dans le mélange dans la moitié inférieure du récipient réactionnel.

13. Utilisation d'un procédé selon une des revendications 1 à 12 pour l'obtention de corps de moule exempts de métal noble.

14. Utilisation d'un procédé selon une des revendications 1 à 12 pour l'obtention d'une solution contenant au moins un métal noble sélectionné parmi le groupe constitué de Au, Ag, Pd, Pt, Ir, Rh, Ru, Os et Re.

15. Utilisation selon la revendication 14, dans laquelle la solution contient en outre au moins un métal également éliminé des corps de moule de catalyseur contenant un métal noble, sélectionné parmi le groupe constitué de métaux lourds non ferreux et de métaux non ferreux.
